(19) **Europäisches Patentamt**

**European Patent Office**

**Office européen des brevets**

(11) Veröffentlichungsnummer: **0 299 439 B1**

(12) **EUROPÄISCHE PATENTSCHRIFT**

(45) Veröffentlichungstag der Patentschrift: **30.09.92**

(21) Anmeldenummer: **88111153.8**

(22) Anmeldetag: **12.07.88**

(51) Int. Cl.⁵: **B32B 27/08**, B32B 27/12, B32B 7/02, B29C 61/06

(54) **Wärmeschrumpfbare Umhüllung.**

(30) Priorität: **15.07.87 DE 3723397**

(43) Veröffentlichungstag der Anmeldung:
**18.01.89 Patentblatt 89/03**

(45) Bekanntmachung des Hinweises auf die Patenterteilung:
**30.09.92 Patentblatt 92/40**

(84) Benannte Vertragsstaaten:
**AT BE CH DE FR GB IT LI NL SE**

(56) Entgegenhaltungen:
**EP-A- 0 117 026**
**DE-U- 7 501 913**

(73) Patentinhaber: **RXS Schrumpftechnik-Garnituren GmbH**
**Profilstrasse 4**
**W-5800 Hagen 1(DE)**

(72) Erfinder: **Kipfelsberger, Christian, Dipl.-Ing.**
**Hauptstrasse 1**
**W-8071 Hepberg(DE)**
Erfinder: **Kupczyk, Andreas**
**Hengsteyerstrasse 41**
**W-5800 Hagen 1(DE)**
Erfinder: **Winterhoff, Hans, Dipl.-Ing.**
**Seestrasse 2 c**
**W-5800 Hagen 1(DE)**

(74) Vertreter: **Fuchs, Franz-Josef, Dr.-Ing. et al**
**Postfach 22 13 17**
**W-8000 München 22(DE)**

## Beschreibung

Die Erfindung betrifft eine wärmeschrumpfbare Umhüllung aus mindestens einer wärmeschrumpfbaren Komponente und aus einer mechanisch verstärkenden Komponente, bestehend aus einem vernetzten, Kristallinen Thermoplast (Schrumpfcompound).

Es sind wärmeschrumpfbare Umhüllungen bekannt, die zur Verstärkung der mechanischen Eigenschaften verstärkende Einlagen enthalten, wie sie zum Beispiel in der Schrift des deutschen Gebrauchsmusters GM 75 01 913 beschrieben sind. Hier werden jedoch nur längsgerichtete Verstärkungselemente verwendet, damit die Schrumpfrichtung der Umhüllung nicht beeinflußt wird. Dies hat jedoch zur Folge, daß sich Verletzungen an der Umhüllung, wie zum Beispiel Einrisse in Längsrichtung, ungehindert fortsetzen können. Dies ist besonders dann gefährlich, wenn diese Verletzungen an einem stirnseitigen Rand erfolgen, da dann beim Schrumpfen infolge der Schrumpfkräfte ein weiteres Einreißen in Längsrichtung der Umhüllung nicht aufzuhalten ist.

Um dieses Problem zu lösen, werden zum Beispiel auch Gewebe oder Gewirke eingesetzt, die in der europäischen Patentschrift 0 117 026 beschrieben werden. Dort werden jedoch schrumpfbare Gewebe verwendet, die in einem nicht schrumpfbaren Material eingebettet sind. Um eine entsprechende höhere mechanische Festigkeit zu erreichen, sind in diesen Geweben neben den in einer ersten Schrumpfrichtung verlaufenden schrumpfbaren Fäden auch nicht schrumpfbare, wärmebeständige Fäden eingelegt, die in der zweiten Geweberichtung verlaufen. Damit ist auch bei diesen Einlagen im wesentlichen nur eine Richtung gegen Verletzungen gesichert. Zum anderen ist die Herstellung von Umhüllungen mit derartigen Geweben wesentlich aufwendiger als die herkömmliche Art, bei der durch flächenhafte oder rohrförmige Extrusion das benötigte Flächengebilde bereits in seiner Rohform erhalten wird.

Für vorliegende Erfindung ergibt sich also die Aufgabe, eine wärmeschrumpfbare Umhüllung zu schaffen, die in einfacher Art herzustellen ist und bei der die mechanische Festigkeit so verbessert ist, daß lokale Verletzungen oder Einschnitte nicht zu weiterreichenden Defekten führen. Die gestellte Aufgabe wird nun gemäß der Erfindung mit einer wärmeschrumpfbaren Umhüllung der eingangs erläuterten Art dadurch gelöst, daß die schrumpfbare Komponente aus einer die ganze Umhüllung überstreckenden Flächenfolie besteht, daß die schrumpfbare Komponente geweitet ist, daß die mechanische Verstärkungskomponente zumindest in Teilbereichen der Umhüllung angeordnet und im festen Verbund zur schrumpfbaren Komponente gebracht ist, daß die mechanische Verstärkungskomponente zumindest in Schrumpfrichtung verlaufende Verstärkungselemente aufweist, wobei diese Verstärkungselemente so gestaltet sind, daß eine der Schrumpfung der schrumpfbaren Komponente entsprechende Formänderung möglich ist.

Bevorzugte Ausgestaltungen der erfindungsgemäßen Umhüllung sind den abhängigen Ansprüchen zu entnehmen.

Vorteile sind nun an der Erfindung insbesondere darin zu sehen, daß diese wärmeschrumpfbare Umhüllung durch die Wahl seiner Einzelkomponenten optimal auf ihre Bestimmung eingestellt werden kann. So ist die schrumpfbare Komponente in herkömmlicher Weise auf einfache Art durch Extrusion, Vernetzung und anschließender Weitung als Flächenfolie herzustellen. Dabei ist bei der Herstellung dieser schrumpfbaren Komponente nicht so sehr auf die mechanische Festigkeit zu achten, da hierfür eine zweite, mechanische Verstärkungskomponente verwendet wird, die wiederum ihren Anforderungen durch geeignete Wahl der einzelnen Verstärkungselemente optimal angepaßt werden kann. Beide Komponenten werden dann in einfacher Weise im festen Verbund zueinander gebracht, so daß schließlich ein wärmeschrumpfbares Produkt mit optimal abgestimmten Schrumpfverhältnissen und entsprechend geforderter mechanischer Festigkeit zur Verfügung steht. Durch die Wahl und Anordnung der mechanischen Verstärkungselemente kann zum Beispiel auch das Einreißen bzw. Weiterreißen an Kanten oder Löchern erheblich verbessert werden. Außerdem ergibt sich eine wesentliche Verbesserung der Eigenschaften bezüglich der Berstfestigkeit, der Druckdichtigkeit und sonstiger mechanischer Eigenschaften, wie zum Beispiel Abrieb und dergleichen. So ist es beispielsweise nun auch möglich, in eine schrumpfbare Umhüllung ein ausreißfestes Loch einzubringen, das für den Einsatz eines Ventils oder ähnlichen Zusatzes benötigt wird. Hier bestanden bisher erhebliche Schwierigkeiten, da sich derartige Öffnungen beim Schrumpfvorgang aufweiteten und schließlich einreißen konnten.

Mit einer Umhüllung gemäß der Erfindung hingegen werden solche Probleme ohne Gefahr gelöst. Diese Einreißfestigkeit ergibt sich nun durch entsprechend eingelagerte Verstärkungselemente, die so ausgerichtet sind, daß die Einreiß- oder Weiterreißrichtung quer dazu verlaufen würde. Dies wird beispielsweise erreicht durch eine Vielzahl von ungerichteten, sich überlagernden Verstärkungselementen oder durch bewußte Anordnung von quer oder unter bestimmten Winkeln gegeneinander verlaufenden Verstärkungselementen, wie es zum Beispiel bei gitterförmiger, gewebter oder gewirkter Struktur gegeben ist. Dadurch, daß nun diese mechanische Verstärkungskomponente entweder durch eigene Trägerfolien oder durch die feste Auflage auf der schrumpfenden Komponente fixiert sind, kann die schrumpfende Komponente und damit die dichtende Umhüllung bei einer Verletzung jeweils nur bis zum nächst folgenden, quer zur Reißrichtung liegenden Verstärkungselement einreißen. Je enger also solche Verstärkungselemente angeordnet sind, umso kleiner wird damit die Einreiß-bzw. Weiterreißmöglichkeit.

So können gemäß der Erfindung für die mechanische Verstärkungskomponente Synthetic- oder Naturfasern verwendet werden, wobei je nach Anwendungsfall - das heißt je nach Bedarf an zusätzlicher mechanischer Festigkeit - die einzelnen Verstärkungselemente als einzelne, in verschiedene Richtungen verlaufende Fadeneinlagen, als flächenhafte Gewebe oder Gewirke oder auch als Gitter mit gegenseitig fest aneinander haftenden Einzelelementen in den Kreuzungspunkten ausgebildet bzw. angeordnet sind. Diese Verstärkungselemente werden einzeln oder in einer bereits beschriebenen Verbundform entweder direkt auf die schrumpfende Komponente aufgebracht oder auf bzw. in einer Trägerfolie gelagert und dann in festen Verbund mit der schrumpfenden Komponente gebracht. Dies hat den Vorteil, daß die mechanische Verstärkungskomponente auf die fertige, das heißt vernetzte und geweitete Schrumpfkomponente aufgebracht werden kann, wenn Verstärkungselemente verwendet werden, die an sich nicht oder kaum dehnbar. Sie sind jedoch so gestaltet, daß sich die Schrumpffähigkeit der schrumpfenden Komponente voll entfalten kann, das heißt, sie sind während des Schrumpfvorganges so gegeneinander beweglich, umlagerbar oder umformbar, daß der Schrumpfvorgang möglichst ohne Behinderung ablaufen kann. Im gefestigten Zustand ist dann die erhöhte Festigkeit wieder hergestellt, wenn nicht sogar gegenüber dem ersten Zustand erhöht, da nun eine Verdichtung der Verstärkungselemente vorliegt.

Zwischen die einzelnen Schichten von Trägerfolien oder auch zwischen der Trägerfolie und der schrumpfenden Komponente können weitere Schichten, zum Beispiel aus einem Kleber angeordnet werden. So ist jedoch auch vielseitig von Vorteil, wenn die schrumpfende Komponente und die Trägerfolie bzw. die mechanisch verstärkende Komponente aus dem gleichen Grundcompound bestehen, wobei jedoch nur die schrumpfende Komponente vernetzt und geweitet ist. Durch das gleiche Material läßt sich eine besonders innige Haftung, zum Beispiel durch Zusammenschmelzung erreichen.

Für die schrumpfende Komponente eignet sich ganz allgemein jede Art von vernetzten, kristallinen Thermoplasten, wie zum Beispiel vernetzte Polyolefine und darunter besonders Polyethylen, Polybuten und ähnliche Kunststoffe. Diese Grundmaterialien für die schrumpfende Komponente werden nach der Extrusion durch Bestrahlung oder durch chemische Mittel vernetzt und dann geweitet, und zwar mit dem Weitungsgrad, der für die maximale Schrumpfung des Gegenstandes gefordert wird. Für die chemische Vernetzung werden beispielsweise Vernetzungsbeschleuniger, zum Beispiel Trialylcyanurat, beigemischt.

Für die mechanischen Verstärkungselemente eignen sich optimal synthetische wie auch natürliche Grundelemente, also Materialien wie Metalle, Polyester, Polyurethan, Polyamid, Epoxide, Zellwolle oder Glas. Meist sind diese Materialien hierfür als Fasern ausgebildet und werden dann in den gewünschten Verbund gebracht. Sie müssen jedoch gegenüber der schrumpfenden Komponente temperaturbeständig sein, das heißt, sie müssen auch bei Schrumpftemperatur ihre mechanischen Eigenschaften aufweisen und dürfen kaum erweichen oder gar schmelzen. Anders ist es bei den Trägerfolien für die Verstärkungselemente, die beide zusammen die mechanische Verstärkungskomponente bilden. Die hierfür verwendeten Materialien dürfen bei Schrumpftemperatur nicht schmelzen, sie müssen jedoch so flexibel sein oder bei Erwärmung so weich werden ohne abzufließen, daß der Schrumpfvorgang der schrumpfenden Komponente völlig zur Geltung kommen kann. Hierfür eignen sich als Materialien beispielsweise ebenfalls Polyolefine, die allerdings nicht bzw. nicht so stark vernetzt werden wie das der schrumpfenden Komponente. Eine Weitung dieser Folien kann unterbleiben, da eine Schrumpfung der Trägerfolie nicht notwendig ist. Sie dient in erster Linie der Fixierung der Verstärkungselemente. Doch sind auch schrumpffähige oder auch teilweise schrumpffähige Trägerfolien einsetzbar, wenn es gilt, besondere Forderungen zu erfüllen. Dies kann beispielsweise bei hohem Schrumpfungsgrad, bei verschieden stark zu schrumpfenden Bereichen oder ähnlichen Besonderheiten nützlich sein. Ebenfalls ist es auch möglich, für mechanische Verstärkungselemente schrumpfende oder teilweise schrumpfende Materialien zu verwenden, die dann einem ähnlichen Zweck dienen. Dabei ist vorteilhaft, den Verbund zum Beispiel mit einem Schmelzkleber herzustellen, damit ein gegenseitiger Ausgleich zwischen den einzelnen Schichten stattfinden kann.

Die Erfindung wird nun anhand von 12 Figuren näher erläutert.

Figur 1      zeigt den prinzipiellen schichtförmigen Aufbau der wärmeschrumpfbaren Umhüllung gemäß der Erfindung.

Figur 2      verdeutlicht den Aufbau der mechanischen Verstärkungskomponente, bestehend aus Verstärkungselementen und einer Trägerfolie.

Figur 3     verdeutlicht den Aufbau der Verstärkungskomponente, bei der Verstärkungselemente in einer oder zwischen zwei Trägerfolien angeordnet sind.

Figur 4     zeigt eine zusätzliche Kleberschicht auf der schrumpfbaren Umhüllung.

Figur 5     zeigt die kreuzförmige Anordnung von einzelnen Verstärkungselementen.

Figur 6     zeigt eine gitterförmige Anordnung von einzelnen Verstärkungselementen.

Figur 7     zeigt einen geweiteten bzw. gewirkten Strukturverbund von Verstärkungselementen.

Figur 8     verdeutlicht eine kreuzförmige Anordnung von Verstärkungselementen, wobei die einzelnen Verstärkungselemente parallel bzw. senkrecht zur Schrumpfrichtung verlaufen.

Figur 9     verdeutlicht eine rautenförmige Anordnung von Verstärkungselementen.

Figur 10     zeigt ein Ausführungsbeispiel für eine Umhüllung mit längsseitig angeformten Verschlußelementen.

Figur 11     zeigt die zusammengefügte Umhüllung nach Figur 10.

Figur 12     zeigt einen verstärkten Bereich gemäß der Erfindung an einer Abzweigmuffe.

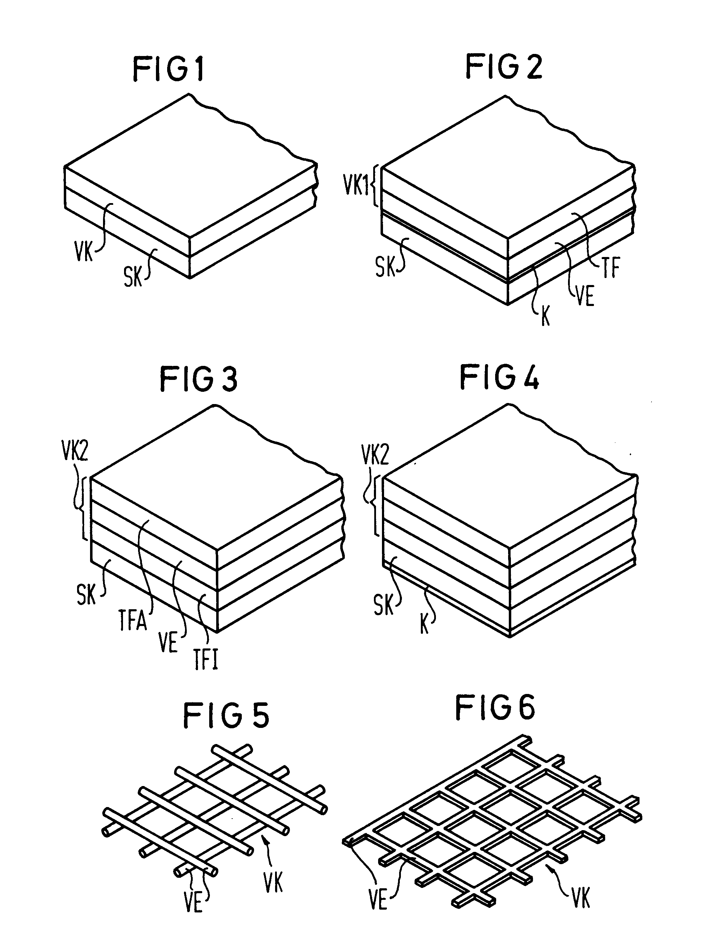

Figur 1 zeigt den prinzipiellen Aufbau eines Flächengebildes, welches für eine Umhüllung gemäß der Erfindung verwendet wird. Dieses Flächengebilde besteht wie bereits ausführlich beschrieben aus einer schrumpfenden Komponente SK, durch die das Schrumpfen bewirkt wird. Diese besteht also aus einem Schrumpfcompound, das extrudiert, vernetzt und geweitet ist. Diese schrumpfende Komponente SK ist mit der darüberliegenden Verstärkungskomponente VK in festen Verbund gebracht. Diese Verstärkungskomponente VK besteht aus den ebenfalls bereits beschriebenen einzelnen Verstärkungselementen, die speziell in diesem Beispiel direkt auf die schrumpfende Komponente SK aufgebracht sind. Diese Verstärkungskomponente VK ist zum Beispiel nicht geweitet und hat somit keine schrumpfende, sondern nur verstärkende Funktion. Doch sind auch schrumpfende oder teilschrumpfende Verstärkungskomponenten einsetzbar.

Die Figur 2 zeigt einen Schichtaufbau für eine Umhüllung nach der Erfindung, bei dem die Verstärkungskomponente VK1 aus einer Trägerfolie TF besteht, auf welche die Verstärkungselemente VE aufgebracht sind. Die Trägerfolie TF mit den Verstärkungselementen VE ist hier entweder direkt, zum Beispiel durch Verschmelzung der Materialien von Trägerfolie TF und schrumpfender Komponente SK, oder mittels einer Zwischenschicht aus einem Haftvermittler, zum Beispiel aus einem üblichen Schmelzkleber, auf die schrumpfende Komponente SK aufgebracht. Hier ist unter Umständen von zusätzlichem Vorteil, daß bei Wärmezufuhr während des Schrumpfvorganges infolge der weich werdenden Schmelzkleberschicht eine gegenseitige Verschiebung der beiden Komponenten zueinander ermöglicht wird. Dies begünstigt den Schrumpfvorgang, wobei die mechanische Festigkeit nach dem Erkalten wieder völlig hergestellt ist. So ist ebenfalls ein relaxierender Spannungsausgleich der verschiedenen Schichten möglich. Solche Ausgleiche sind zum Beispiel auch nötig, wenn nur Teilbereiche der Trägerfolien geweitet sind, so daß Bereiche mit verschiedener Schrumpfung gegeben sind. In den Übergangsbereichen müssen sich dann die Spannungsverhältnisse ausgleichen können.

Die Figur 3 zeigt ein Ausführungsbeispiel gemäß der Erfindung, bei dem die Verstärkungselemente VE zwischen zwei Trägerfolien TFA und TFI eingelagert sind. Hier läßt sich die Verstärkungskomponente VK2 vor dem Zusammenfügen mit der schrumpfenden Komponente SK als Verbundelement separat herstellen, so daß für jede Komponente optimale Verhältnisse gewählt werden können. Die Darstellung der beiden Trägerfolien TFA und TFI kann auch so aufgefaßt werden, daß nur eine einzige Trägerfolie vorhanden ist, in welche die Verstärkungselemente VE eingebettet sind.

Die Figur 4 zeigt ein Ausführungsbeispiel, das im Aufbau dem Verbundbeispiel nach Figur 3 entspricht; jedoch ist hier zusätzlich eine weitere Schicht K aufgebracht, die vorzugsweise auf der dem zu umhüllenden Gegenstand zuweisenden Seite aufgebracht wird und die aus einem Kleber, vorzugsweise aus einem Schmelzkleber, besteht. Hierdurch erfolgt die Abdichtung, da zwischen der schrumpfbaren Umhüllung und dem zu umhüllenden Gegenstand eine dichte Verbindung gebildet wird.

Die Figur 5 zeigt einzelne Verstärkungselemente VE, die zu einer Verstärkungskomponente VK beispielsweise in loser oder fester Kreuzform zusammengefügt sind. Diese Struktur wird dann direkt oder mit einer Trägerfolie mit der schrumpfenden Komponente in Verbund gebracht.

Die Figur 6 verdeutlicht eine gitterförmige Struktur, wobei die Beschaffenheit und das Material so gewählt sind, daß zumindest während des Schrumpfvorganges eine Beweglichkeit gegeben ist, die den Schrumpfvorgang möglichst nicht behindert. Hierfür eignen sich beispielsweise, wie bereits oben beschrieben, nicht vernetzte Kunststoffe, die bei Schrumpftemperatur wohl weich werden können, jedoch nicht schmelzen. Nach dem Erkalten stellt sich die vorherige Festigkeit wieder ein.

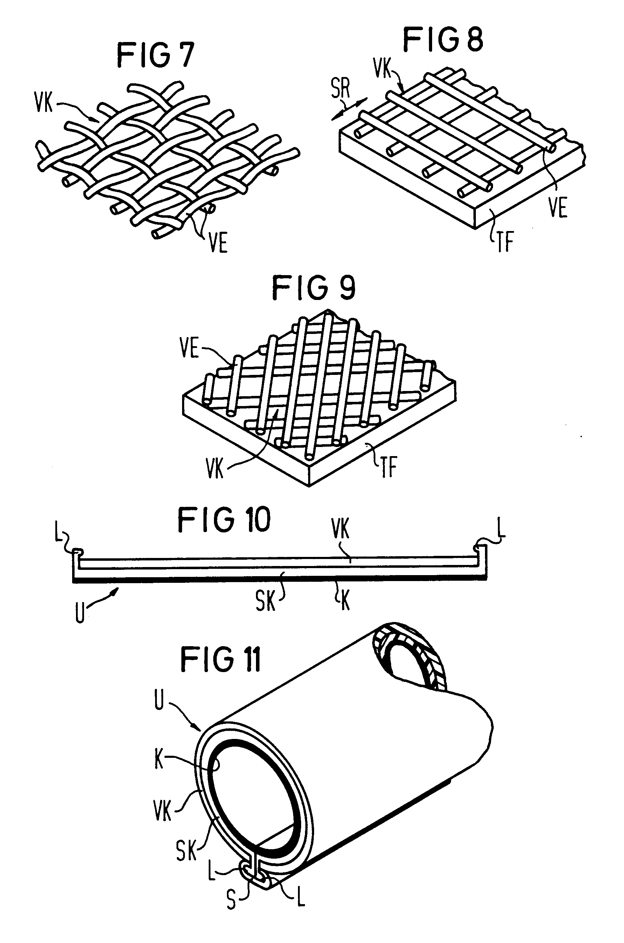

Die Figur 7 zeigt nun als Verstärkungselement VE ein Gewebe bzw. Gewirke, bei dem die einzelnen Verstärkungselemente VE gegeneinander beweglich sind, so daß die erforderliche Beweglichkeit beim Weichwerden der Trägerfolien gegeben ist. Dadurch erfolgt die Formanpassung während des Schrumpfvorganges und im endgültigen Zustand sind dann die Verstärkungselemente VE wieder fixiert und die verstärkende Wirkung und der Schutz gegen Ein- bzw. Weiterreißen ist völlig gegeben.

Die Figur 8 zeigt eine Verstärkungskomponente VK, die aus kreuzförmig angeordneten Verstärkungselementen VE, zum Beispiel nach Figur 5 besteht. Durch den Pfeil SR soll angedeutet sein, daß die anschließend aufgebrachte schrumpfende Komponente eine Schrumpfrichtung SR aufweist, die parallel zu einer Richtung und senkrecht zur zweiten Richtung der aufgelegten Verstärkungselemente VE verläuft. Dadurch ist sichergestellt, daß ein Ein-bzw. Weiterriß nur bis zum jeweils nächsten querlaufenden Verstärkungselement VE erfolgen kann, wie von der Erfindung erwartet wird.

Die Figur 9 zeigt eine Abwandlung des Aufbaues nach Figur 8 nur darin, daß hier eine rautenförmige Anordnung der Verstärkungselemente VE gewählt ist. Dadurch ergibt sich bei der Schrumpfung keine richtungsgebundene Bevorzugung der verstärkenden Eigenschaften im Sinne der Erfindung.

Die Figur 10 zeigt nun die Anwendung von schrumpfbaren Folien für Umhüllungen gemäß der Erfindung. Hier wird die Frontansicht einer Umhüllung U gezeigt, die aus einer flächenhaften schrumpfenden Komponente SK und einer darüber liegenden Verstärkungskomponente VK besteht, wobei vorzugsweise die Verstärkungskomponente VK auf der späteren Außenseite der Umhüllung angeordnet ist. An jedem Längsrand verläuft ein hinterschnittener Teilwulst L, die im zusammengefügten Zustand im Querschnitt ein T-förmiges Verschlußelement bilden, über das zum Beispiel eine angepaßte Verschlußschiene aufgezogen werden kann.

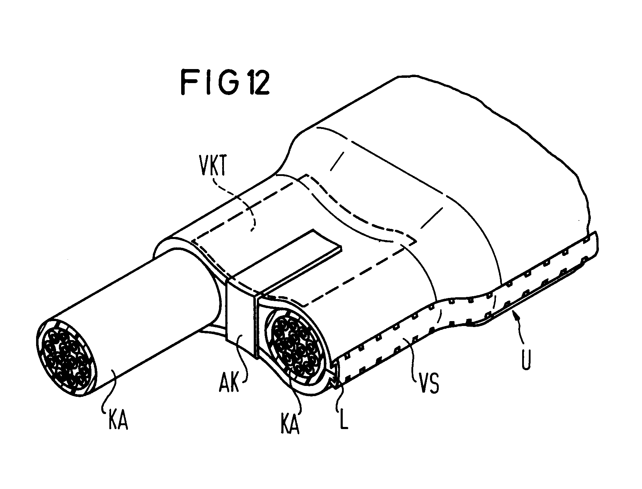

Die Figur 11 zeigt nun die Umhüllung U nach Figur 10 im montierten Zustand. So ist die Umhüllung U mit ihren beiden längsverlaufenden Verschlußelementen L zusammengefügt, wobei auf sie eine Schiene S aufgezogen ist. In diesem Fall liegt dann die Verstärkungskomponente VK außen, dann folgt nach innen die schrumpfende Komponente SK und schließlich die Kleberschicht K. Bei Zuführung von Wärme bewirkt die schrumpfende Komponente SK die Schrumpfung, die Kleberschicht die Abdichtung und die außen befindliche Verstärkungskomponente VK den Schutz gegen mechanische Umwelteinflüsse.

Figur 12 zeigt ein Ausführungsbeispiel für den Einsatz einer mechanischen Verstärkungskomponente VKT in einem Teilbereich einer als Verzweigungsmuffe ausgebildeten Umhüllung U.In dem Teilbereich zwischen den beiden eingeführten Kabeln KA ist eine Abzweigklammer AK eingesetzt, die mit ihren beiden Schenkeln die Umhüllung zusammenhält. Im inneren Zwickelbereich ist beispielsweise ein Füllstück eingebracht, gegen das die Umhüllung gedrückt wird. Während des Schrumpfvorganges treten hier gegenüber den anderen Bereichen der Umhüllung U erhebliche mechanische Belastungen auf, so daß hier die Gefahr des Ein-und Weiterreißens besonders groß ist. Durch die mechanische Verstärkungskomponente VKT in diesem Teilbereich wird dies gemäß der erfindungsgemäßen Ausbildung verhindert. In dieser Figur wird weiterhin der Längsverschluß mit den beiden Längswülsten L und der aufgezogenen Verschlußschiene VS angedeutet.

Wie bereits erwähnt, ist es möglich, auch die Verstärkungskomponente VK und damit die Trägerfolien TF und/oder die Verstärkungselemente VE zumindest in Teilbereichen schrumpfbar zu gestalten. Dadurch lassen sich beliebige Variationen herstellen, die dem jeweils erforderlichen Fall optimal angepaßt werden können.

Außerdem kann die Verstärkungskomponente VK entlang eines Längsrandes der Umhüllung als Untertritt über die schrumpfende Komponente SK hinaus verlängert werden, so daß der Längsspalt im montierten Zustand der Umhüllung überdeckt und abgedichtet werden kann.

So ist auch die partielle Verwendung von mechanischen Verstärkungskomponenten VK möglich, die sich aufgrund der Ausreißfestigkeit beispielsweise auch für das Einsetzen von Verschlußelementen, wie Knöpfelementen, Heftklammern oder ähnlichem eignen. So kann mit solchen Elementen im Zusammenspiel mit der mechanischen Verstärkungskomponente VK ein Abzweig für eine Kabelmuffe geschaffen werden. Derartige Ausgestaltungen sind bei schrumpfbaren Muffen bisher kaum möglich, da die Verschlußelemente bzw. die schrumpfbare Komponente ausgerissen sind.

Bei Verwendung als Umhüllung für Gegenstände aus anschmelzbarem Kunststoff, wie zum Beispiel ein Kunststoffkabelmantel, oder Gegenstände mit einer solchen Beschichtung ist es vorteilhaft auf der zugewandten Seite ebenfalls eine bei Schrumpftemperatur schmelzende Innenschicht auf die Umhüllung aufzubringen, wie zum Beispiel ein niedrig schmelzendes Polyethylen (low-density-Polyethylen).Auf diese Weise läßt sich durch gegenseitige Materialverschmelzung eine besonders gute Abdichtung erzielen.

Für die schrumpfbare Komponente SK können auch elastische Elemente aus Werkstoffen wie Gummi oder ähnlichen Materialien verwendet werden. In solchen Fällen werden dann diese elastischen Elemente in gedehntem Zustand in bzw. zwischen Kunststoffplatten, die bei Wärmezufuhr weich werden eingelagert. Bei Zuführung von Wärme erweichen dann diese Kunststoffplatten und die "eingefrorenen" elastischen Kräfte bewirken insgesamt eine Rückbildung im Sinne des Schrumpfens. Nach dem Erkalten ist dann die übliche Formbeständigkeit wieder hergestellt.

**Patentansprüche**

1. Wärmeschrumpfbare Umhüllung aus mindestens einer wärmeschrumpfbaren Komponente bestehend aus einem vernetzten, Kristallinen Thermoplast (Schrumpfcompound) und aus einer mechanisch verstärkenden Komponente, **dadurch gekennzeichnet,** daß die schrumpfbare Komponente (SK) aus einer die ganze Umhüllung überstreckenden Flächenfolie besteht, daß die schrumpfbare Komponente (SK) geweitet ist, daß die mechanische Verstärkungskomponente (VK) zumindest in Teilbereichen der Umhüllung angeordnet und im festen Verbund zur schrumfpbaren Komponente (SK) gebracht ist, daß die mechanische Verstärkungskomponente (VK) zumindest in Schrumpfrichtung verlaufende Verstärkungselemente (VE) aufweist, wobei diese Verstärkungselemente (VE) so gestaltet sind, daß eine der Schrumpfung der schrumpfbaren Komponente (SK) entsprechende Formänderung möglich ist.

2. Wärmeschrumpfbare Umhüllung nach Anspruch 1, **dadurch gekennzeichnet,** daß die mechanische Verstärkungskomponente (VK) auf die Flächenfolie der schrumpfbaren Komponente (SK) einseitig aufgebracht ist.

3. Wärmeschrumpfbare Umhüllung nach einem der vorhergehenden Ansprüche, **dadurch gekennzeichnet,** daß die Verstärkungselemente (VE) der mechanischen Verstärkungskomponente (VK) auf eine nicht geweitete Trägerfolie (TFI) einseitig aufgebracht ist und daß die Trägerfolie (TFI) fest mit der schrumpfbaren Komponente (SK) verbunden ist.

4. Wärmeschrumpfbare Umhüllung nach einem der Ansprüche 1 bis 2, **dadurch gekennzeichnet,** daß die Verstärkungselemente (VE) der mechanischen Verstärkungskomponente (VK) in einer nicht geweiteten Trägerfolie (TF) eingelagert sind und daß die Trägerfolie (TF) fest mit der schrumpfbaren Komponente (SK) verbunden ist.

5. Wärmeschrumpfbare Umhüllung nach einem der Ansprüche 1 bis 2, **dadurch gekennzeichnet,** daß die Verstärkungselemente (VE) der mechanischen Verstärkungskomponente (VK) zwischen zwei nicht geweiteten Trägerfolien (TFA, TFI) eingelagert sind und daß eine Trägerfolie (TFI) mit der schrumpfenden Komponente (SK) verbunden ist.

6. Wärmeschrumpfbare Umhüllung nach Anspruch 5, **dadurch gekennzeichnet,** daß die Trägerfolien (TFA, TFI) aus verschiedenen Materialien bestehen.

7. Wärmeschrumpfbare Umhüllung nach Anspruch 4, **dadurch gekennzeichnet,** daß ein Haftvermittler (K), vorzugsweise ein Schmelzkleber, zwischen der Trägerfolie (TF) und der schrumpfenden Komponente (SK) angeordnet ist.

8. Wärmeschrumpfbare Umhüllung nach Anspruch 4, **dadurch gekennzeichnet,** daß die Verbindung zwischen der Trägerfolie (TF) und der schrumpfenden Komponente (SK) durch Materialverschmelzung erfolgt ist , wobei die Trägerfolie (TF) und die schrumpfende Komponente (SK) vorzugsweise aus dem gleichen Grundcompoundmaterial bestehen.

9. Wärmeschrumpfbare Umhüllung nach einem der vorhergehenden Ansprüche, **dadurch gekennzeichnet,** daß eine Schmelzkleberschicht (K) zumindest teilweise auf der Innenfläche der Umhüllung (U) angeordnet ist.

10. Wärmeschrumpfbare Umhüllung nach einem der vorhergehenden Ansprüche, **dadurch gekennzeichnet,** daß die Verstärkungselemente (VE) der mechanischen Verstärkungskomponente (VK) aus zugfesten Fäden gebildet sind.

11. Wärmeschrumpfbare Umhüllung nach einem der Ansprüche 1 bis 9, **dadurch gekennzeichnet,** daß die Verstärkungselemente (VE) der mechanischen Verstärkungskomponente (VK) aus einem flächenhaften Gewirke oder Gewebe gebildet sind.

12. Wärmeschrumpfbare Umhüllung nach einem der Ansprüche 1 bis 9,
**dadurch gekennzeichnet,**
daß die Verstärkungselemente (VE) der mechanischen Verstärkungskomponente (VK) aus einem Gitter gebildet sind.

13. Wärmeschrumpfbare Umhüllung nach einem der vorhergehenden Ansprüche,
**dadurch gekennzeichnet,**
daß die Verstärkungselemente (VE) der mechanischen Verstärkungskomponente (VK) aus synthetischem Material, vorzugsweise aus Polyester,Polyurethan, Polyamid, oder Glas bestehen.

14. Wärmeschrumpfbare Umhüllung nach einem der Anspüche 1 bis 12,
**dadurch gekennzeichnet,**
daß die Verstärkungselemente (VE) der mechanischen Verstärkungskomponente (VK) aus Naturfasern, vorzugsweise aus zum Beispiel Baumwolle oder Zellwolle bestehen.

15. Wärmeschrumpfbare Umhüllung nach einem der vorhergehenden Ansprüche,
**dadurch gekennzeichnet,**
daß die mechanische Verstärkungskomponente (VK) nur partiell in den mechanisch besonders beanspruchten Teilbereichen der Umhüllung auf die schrumpfbare Komponente (SK) aufgebracht ist, vorzugsweise in den Randbereichen und in Bereichen von Löchern für Einführungen oder Verzweigungsbereichen.

16. Wärmeschrumpfbare Umhüllung nach einem der vorhergehenden Ansprüche,
**dadurch gekennzeichnet,**
daß mehrere Schichten von mechanischen Verstärkungskomponenten (VK) aufeinander gebracht sind.

17. Wärmeschrumpfbare Umhüllung nach einem der vorhergehenden Ansprüche,
**dadurch gekennzeichnet,**
daß die Verstärkungselemente (VE) der mechanischen Verstärkungskomponente (VK) aus verschiedenen Materialien, insbesondere aus einer Mischung von Natur- und Synthetikelementen, bestehen.

18. Wärmeschrumpfbare Umhüllung nach einem der vorhergehenden Ansprüche,
**dadurch gekennzeichnet,**

daß die einzelnen Verstärkungselemente (VE) gegeneinander beweglich sind, wie vorzugsweise bei Gewebestrukturen.

19. Wärmeschrumpfbare Umhüllung nach einem der Ansrpüche 1 bis 17,
**dadurch gekennzeichnet,**
daß die einzelnen Verstärkungselemente (VE) gegeneinander nicht beweglich sind, wie vorzugsweise bei gitterförmigen Strukturen.

20. Wärmeschrumpfbare Umhüllung nach einem der vorhergehenden Ansprüche,
**dadurch gekennzeichnet,**
daß die mechanische Verstärkungskomponente (VK) auf der Außenseite der Umhüllung (U) angeordnet ist.

21. Wärmeschrumpfbare Umhüllung nach einem der Ansprüche 1 bis 19,
**dadurch gekennzeichnet,**
daß die mechanische Verstärkungskomponente (VK) auf der Innenseite der Umhüllung (U) angebracht und vorzugsweise als Untertritt verlängert ist.

22. Wärmeschrumpfbare Umhüllung nach einem der Ansprüche 1 bis 19,
**dadurch gekennzeichnet,**
daß die mechanische Verstärkungskomponente (VK) auf der Innen-und Außenseite der Umhüllung (U) angeordnet ist und daß vorzugsweise die innere mechanische Verstärkungskomponente (VK) als Untertritt verlängert ist.

23. Wärmeschrumpfbare Umhüllung nach einem der vorhergehenden Ansprüche,
**dadurch gekennzeichnet,**
daß die aus synthetischem Material bestehenden Verstärkungselemente (VE) vernetzt sind.

24. Wärmeschrumpfbare Umhüllung nach einem der vorhergehenden Ansprüche,
**dadurch gekennzeichnet,**
daß die synthetischen Trägerfolien (TF) vernetzt sind.

25. Wärmeschrumpfbare Umhüllung nach einem der vorhergehenden Ansprüche,
**dadurch gekennzeichnet,**
daß im synthetischen Material der mechanischen Verstärkungskomponente (VK) bei Wärmezufuhr aktivierbare Vernetzungsbeschleuniger, vorzugsweise Trialylcyanurat eingebracht sind.

26. Wärmeschrumpfbare Umhüllung nach einem der vorhergehenden Ansprüche,

**dadurch gekennzeichnet,**
daß die Verstärkungselemente (VE) der mechanischen Verstärkungskomponente gereckt sind.

27. Wärmeschrumpfbare Umhüllung nach Anspruch 26,
    **dadurch gekennzeichnet,**
    daß die fest eingelagerten Verstärkungselemente (VE) aus Gummi bestehen.

28. Wärmeschrumpfbare Umhüllung nach einem der vorhergehenden Ansprüche,
    **dadurch gekennzeichnet,**
    daß die mechanische Verstärkungskomponente (VK) zumindest teilweise schrumpfbar ist.

29. Wärmeschrumpfbare Umhüllung nach einem der vorhergehenden Ansprüche,
    **dadurch gekennzeichnet,**
    daß die Verstärkungselemente (VE) der mechanischen Verstärkungskomponente (VK) zumindest teilweise schrumpfbar bzw. rückdehnbar sind.

30. Wärmeschrumpfbare Umhüllung nach einem der vorhergehenden Ansprüche,
    **dadurch gekennzeichnet,**
    daß eine niedrig schmelzbare Schicht, vorzugsweise eine Polyethylenschicht (low-density-Polyethylen) auf der Innenseite der Umhüllung (U) angeordnet ist.

31. Wärmeschrumpfbare Umhüllung nach einem der vorhergehenden Ansprüche,
    **dadurch gekennzeichnet,**
    daß in den Rand- und/oder Verzweigungsbereichen der Umhüllung (U) in den mit der mechanischen Verstärkungskomponente (VK) versehenen Bereichen Verschlußelemente eingebracht sind.

32. Wärmeschrumpfbare Umhüllung nach einem der vorhergehenden Ansprüche,
    **dadurch gekennzeichnet,**
    daß die Trägerfolien (TF) zumindest teilweise schrumpfbar sind.

## Claims

1. Heat-shrinkable covering comprising at least one heat-shrinkable component, consisting of a crosslinked, crystalline thermoplastic (shrinking compound), and a mechanically reinforcing component, characterised in that the shrinkable component (SK) comprises a sheet-like film extending over the entire covering, in that the shrinkable component (SK) is widened, in that the mechanical reinforcing component (VK) is arranged at least in sub-areas of the covering and has been brought into a firm bond with the shrinkable component (SK), in that the mechanical reinforcing component (VK) has reinforcing elements (VE), at least running in the shrinkage direction, these reinforcing elements (VE) being composed such that a change in shape corresponding to the shrinkage of the shrinkable component (SK) is possible.

2. Heat-shrinkable covering according to Claim 1, characterised in that the mechanical reinforcing component (VK) is applied to one side of the sheet-like film of the shrinkable component (SK).

3. Heat-shrinkable covering according to one of the preceding claims, characterised in that the reinforcing elements (VE) of the mechanical reinforcing component (VK) are applied to one side of an unwidened base film (TFI) and in that the base film (TFI) is firmly bonded to the shrinkable component (SK).

4. Heat-shrinkable covering according to one of Claims 1 or 2, characterised in that the reinforcing elements (VE) of the mechanical reinforcing component (VK) are incorporated in an unwidened base film (TF) and in that the base film (TF) is firmly bonded to the shrinkable component (SK).

5. Heat-shrinkable covering according to one of Claims 1 or 2, characterised in that the reinforcing elements (VE) of the mechanical reinforcing component (VK) are incorporated between two unwidened base films (TFA, TFI) and in that one base film (TFI) is bonded to the shrinkable component (SK).

6. Heat-shrinkable covering according to Claim 5, characterised in that the base films (TFA, TFI) consist of different materials.

7. Heat-shrinkable covering according to Claim 4, characterised in that an adhesion promoter (K), preferably a hot-melt adhesive, is arranged between the base film (TF) and the shrinkable component (SK).

8. Heat-shrinkable covering according to Claim 4, characterised in that the bonding between the base film (TF) and the shrinkable component (SK) takes place by material fusion, the base film (TF) and the shrinkable component (SK) preferably consisting of the same basic compound material.

9. Heat-shrinkable covering according to one of the preceding claims, characterised in that a layer of hot-melt adhesive (R) is arranged at least on part of the inner surface of the covering (U).

10. Heat-shrinkable covering according to one of the preceding claims, characterised in that the reinforcing elements (VE) of the mechanical reinforcing component (VK) are formed by tension-resistant filaments.

11. Heat-shrinkable covering according to one of Claims 1 to 9, characterised in that the reinforcing elements (VE) of the mechanical reinforcing component (VK) are formed by a sheet-like knitted or woven fabric.

12. Heat-shrinkable covering according to one of Claims 1 to 9, characterised in that the reinforcing elements (VE) of the mechanical reinforcing component (VK) are formed by a lattice.

13. Heat-shrinkable covering according to one of the preceding claims, characterised in that the reinforcing elements (VE) of the mechanical reinforcing component (VK) consist of synthetic material, preferably of polyester, polyurethane, polyamide or glass.

14. Heat-shrinkable covering according to one of Claims 1 to 12, characterised in that the reinforcing elements (VE) of the mechanical reinforcing component (VK) consist of natural fibres, preferably of, for example, cotton or viscose rayon.

15. Heat-shrinkable covering according to one of the preceding claims, characterised in that the mechanical reinforcing component (VK) is applied to the shrinkable component (SK) only partially in those sub-areas of the covering which are particularly subjected to mechanical stresses, preferably in the edge areas and in areas of holes for entries or branching areas.

16. Heat-shrinkable covering according to one of the preceding claims, characterised in that a plurality of layers of mechanical reinforcing components (VK) are arranged one on another.

17. Heat-shrinkable covering according to one of the preceding claims, characterised in that the reinforcing elements (VE) of the mechanical reinforcing component (VK) consist of different materials, in particular of a mixture of natural and synthetic elements.

18. Heat-shrinkable covering according to one of the preceding claims, characterised in that the individual reinforcing elements (VE) are movable with respect to one another, such as preferably in the case of woven structures.

19. Heat-shrinkable covering according to one of Claims 1 to 17, characterised in that the individual reinforcing elements (VE) are not movable with respect to one another, such as preferably in the case of lattice-shaped structures.

20. Heat-shrinkable covering according to one of the preceding claims, characterised in that the mechanical reinforcing component (VK) is arranged on the outside of the covering (U).

21. Heat-shrinkable covering according to one of Claims 1 to 19, characterised in that the mechanical reinforcing component (VK) is applied to the inside of the covering (U) and is preferably extended as a lower step.

22. Heat-shrinkable covering according to one of Claims 1 to 19, characterised in that the mechanical reinforcing component (VK) is arranged on the inside and outside of the covering (U) and in that preferably the inner mechanical reinforcing component (VK) is extended as a lower step.

23. Heat-shrinkable covering according to one of the preceding claims, characterised in that the reinforcing elements (VE) consisting of synthetic material are crosslinked.

24. Heat-shrinkable covering according to one of the preceding claims, characterised in that the synthetic base films (TF) are crosslinked.

25. Heat-shrinkable covering according to one of the preceding claims, characterised in that crosslinking accelerators which can be activated by the supply of heat, preferably triallyl cyanurate, are incorporated in the synthetic material of the mechanical reinforcing component (VK).

26. Heat-shrinkable covering according to one of the preceding claims, characterised in that the reinforcing elements (VE) of the mechanical reinforcing component are stretched.

27. Heat-shrinkable covering according to Claim 26, characterised in that the firmly incorporated reinforcing elements (VE) consist of rubber.

28. Heat-shrinkable covering according to one of the preceding claims, characterised in that the mechanical reinforcing component (VK) is at least partially shrinkable.

29. Heat-shrinkable covering according to one of the preceding claims, characterised in that the reinforcing elements (VE) of the mechanical reinforcing component (VK) are at least partially shrinkable and restretchable.

30. Heat-shrinkable covering according to one of the preceding claims, characterised in that a layer of a low melting point, preferably a polyethylene layer (low-density polyethylene), is arranged on the inside of the covering (U).

31. Heat-shrinkable covering according to one of the preceding claims, characterised in that closure elements are incorporated in the edge and/or branching areas of the covering (U) in the areas provided with the mechanical reinforcing component (VK).

32. Heat-shrinkable covering according to one of the preceding claims, characterised in that the base films (TF) are at least partially shrinkable.

**Revendications**

1. Gaine thermorétractable en au moins un constituant rétractable, constituée d'au moins une matière thermoplastique cristalline réticulée (composite rétractable) et d'un constituant de renforcement mécanique,
   caractérisée,
   en ce que le constituant rétractable (SK) est constitué d'une feuille plane recouvrant toute la gaine, en ce que le constituant rétractable (SK), est élargi, en ce que le constituant de renforcement mécanique (VK) est disposé au moins dans des régions partielles de la gaine et est relié solidement au constituant rétractable (SK), en ce que le constituant de renforcement mécanique (VK) comporte au moins des éléments de renforcement (VE) s'étendant dans la direction de rétraction, ces éléments de renforcement (VE) étant tels qu'une modification de forme correspondant à la rétraction du constituant rétractable (SK) est possible.

2. Gaine tnermorétractable suivant la revendication 1,
   caractérisée,
   en ce que le constituant de renforcement mécanique (VK) est appliqué d'un côté sur la feuille plane du constituant rétractable (SK).

3. Gaine thermorétractable suivant l'une des revendications précédentes,
   caractérisée,
   en ce que l'élément de renforcement (VE) du constituant de renforcement mécanique (VK) est appliqué d'un côté sur une feuille-support (TFI) non élargie, et en ce que la feuille-support (TFI) est reliée rigidement au constituant rétractable (SK).

4. Gaine thermorétractable suivant l'une des revendications 1 à 2,
   caractérisée,
   en ce que l'élément de renforcement (VE) du constituant de renforcement mécanique (VK) est inséré dans une feuille-support (TE) non élargie, et en ce que la feuille-support (TE) est reliée rigidement au constituant rétractable (SK).

5. Gaine thermorétractable suivant l'une des revendications 1 à 2,
   caractérisée,
   en ce que l'élément de renforcement (VE) du constituant de renforcement mécanique (VK) est inséré entre deux feuilles-supports (TFA, TFI) non élargies, et en ce qu'une feuille-support (TFI) est reliée au constituant se rétractant (SK).

6. Gaine thermorétractable suivant la revendication 5,
   caractérisée,
   en ce que les feuilles-supports (TFA,TFI) sont constituées de matériaux différents.

7. Gaine thermorétractable suivant la revendication 4,
   caractérisée,
   en ce qu'un agent adhésif (K), de préférence une colle fusible, est interposé entre la feuille-support (TF) et le constituant se rétractant (SK).

8. Gaine thermorétractable suivant la revendication 4,
   caractérisée en ce que la liaison entre la feuille-support (TF) et le constituent (SK) se rétractant est effectuée par fusion de matière, la feuille-support (TF) et le constituant se rétractant (SK) étant de préférence en le même matériau composite de base.

9. Gaine thermorétractable suivant l'une des revendications précédentes,
   caractérisée,
   en ce qu'une couche de colle fusible (K) est disposée au moins partiellement sur la surface intérieure de la gaine (U).

**10.** Gaine thermorétractable suivant l'une des revendications précédentes,
caractérisée,
en ce que les éléments de renforcement (VE) du constituant de renforcement mécanique (VK) sont formés de fils résistant à la traction.

**11.** Gaine thermorétractable suivant l'une des revendications 1 à 9,
caractérisée,
en ce que les éléments de renforcement (VE) du constituant de renforcement mécanique (VK) sont constitués d'un tricot ou d'un tissu s'étendant sur une surface.

**12.** Gaine thermorétractable suivant l'une des revendications 1 à 9,
caractérisée,
en ce que les éléments de renforcement (VE) du constituant de renforcement mécanique (VK) sont constitués d'une grille.

**13.** Gaine thermorétractable suivant l'une des revendications précédentes,
caractérisée,
en ce que les éléments de renforcement (VE) du constituant de renforcement mécanique (VK) sont en une matière synthétique, de préférence en polyester, en polyuréthanne, en polyamide ou en verre.

**14.** Gaine thermorétractable suivant l'une des revendications 1 à 12,
caractérisée,
en ce que les éléments de renforcement (VE) du constituant de renforcement mécanique (VK) sont en fibres naturelles, de préférence par exemple en coton ou en laine de cellulose.

**15.** Gaine thermorétractable suivant l'une des revendications précédentes,
caractérisée,
en ce que le constituant de renforcement mécanique (VK) n'est appliqué sur le constituant rétractable (SK) que partiellement dans les régions partielles de la gaine qui sont particulièrement sollicitées mécaniquement, de préférence dans les régions marginales et dans des régions de trous pour des introductions ou des régions de branchement.

**16.** Gaine thermorétractable suivant l'une des revendications précédentes,
caractérisée,

en ce que plusieurs couches de constituant de renforcement mécanique (VK) sont appliquées l'une sur l'autre.

**17.** Gaine thermorétractable suivant l'une des revendications précédentes,
caractérisée,
en ce que les éléments de renforcement (VE) du constituant de renforcement mécanique (VK) sont en matériaux différents, notamment en un mélange d'éléments naturels et synthétiques.

**18.** Gaine thermorétractable suivant l'une des revendications précédentes,
caractérisée,
en ce que les éléments de renforcement (VE) sont mobiles les uns par rapport aux autres, comme par exemple dans des structures tissées.

**19.** Gaine thermorétractable suivant l'une des revendications 1 à 17,
caractérisée,
en ce que les éléments de renforcement (VE) ne sont pas mobiles les uns par rapport aux autres, comme par exemple dans des structures en forme de grilles.

**20.** Gaine thermorétractable suivant l'une des revendications précédentes,
caractérisée,
en ce que le constituant mécanique de renforcement (VK) est disposé du côté extérieur de la gaine (U).

**21.** Gaine thermorétractable suivant l'une des revendications 1 à 19,
caractérisée,
en ce que le constituant mécanique de renforcement (VK) est disposé du côté intérieur de la gaine (U) et, de préférence, se prolonge sous la forme d'une partie venant par en-dessous.

**22.** Gaine thermorétractable suivant l'une des revendications 1 à 19,
caractérisée,
en ce que le constituant de renforcement mécanique (VK) est disposé du côté intérieur et du côté extérieur de la gaine (U), et en ce que, de préférence, le constituant intérieur de renforcement mécanique (VK) est prolongé sous la forme d'une partie venant par en-dessous.

**23.** Gaine thermorétractable suivant l'une des revendications précédentes,

caractérisée,

en ce que les éléments de renforcement (VE) en matériau synthétique sont réticulés.

**24.** Gaine thermorétractable suivant l'une des revendications précédentes,

caractérisée,

en ce que les feuilles-supports (TF) synthétiques sont réticulées.

**25.** Gaine thermorétractable suivant l'une des revendications précédentes,

caractérisée,

en ce que dans le matériau synthétique du constituant de renforcement mécanique (VK) sont introduits des accélérateurs de réticulation susceptibles d'être activés par apport de chaleur, de préférence du cyanurate de triallyle.

**26.** Gaine thermorétractable suivant l'une des revendications précédentes,

caractérisée,

en ce que les éléments de renforcement (VE) du constituant de renforcement mécanique sont étirés.

**27.** Gaine thermorétractable suivant la revendication 26,

caractérisée,

en ce que les éléments de renforcement (VE) insérés solidement sont en caoutchouc.

**28.** Gaine thermorétractable suivant l'une des revendications précédentes,

caractérisée,

en ce que le constituant de renforcement mécanique (VK) est rétractable au moins partiellement.

**29.** Gaine thermorétractable suivant l'une des revendications précédentes,

caractérisée,

en ce que les éléments de renforcement (VE) du constituant de renforcement mécanique (VK) sont rétractables au moins partiellement ou peuvent avoir un retour élastique, au moins partiel.

**30.** Gaine thermorétractable suivant l'une des revendications précédentes,

caractérisée,

en ce qu'une couche à bas point de fusion, de préférence une couche en polyéthylène (polyéthylène basse densité) est disposée du côté intérieur de la gaine (U).

**31.** Gaine thermorétractable suivant l'une des revendications précédentes,

caractérisée,

en ce que, dans les régions marginales et/ou de branchement de la gaine (U), des éléments de fermeture sont insérés dans les régions munies du constituant mécanique de renforcement (VK).

**32.** Gaine thermorétractable suivant l'une des revendications précédentes,

caractérisée,

en ce que les feuilles-supports (TF) sont rétractables, au moins partiellement.

FIG 1

FIG 2

FIG 3

FIG 4

FIG 5

FIG 6

## FIG 7

VK

VE

## FIG 8

SR

VK

VE

TF

## FIG 9

VE

VK

TF

## FIG 10

L

VK

L

SK

K

U

## FIG 11

U

K

VK

SK

L

S

L

# FIG 12

VKT

U

KA  AK  KA  L  VS